# EUROPEAN PATENT APPLICATION

(11) **EP 1 158 423 A2**
(43) Date of publication of application: **28.11.2001**
(21) Application number: 00120367.8
(22) Date of filing: 16.09.2000
(51) Int. Cl.: G06F 17/30

(54) **Internet site search service system using a meta search engine**

(30) Priority: 16.05.2000 KR 0026068
(71) Applicant: LAS21 Co., Ltd., Kangnam-gu, Seoul (KR)
(72) Inventor: Bae, Kyoung Hwa, Seoul (KR); U Park, Min, Sungnam, Kyunggi-do (KR)
(74) Representative: Weitzel, Wolfgang, Dr.-Ing.

(57) **Abstract**

The present invention recognizes in real time the search results collected through numerous dedicated search engines all over the world by using a meta search engine, automatically classifies the search results into the terms by subjects similar to the search terms inputted by users, and provides the automatically classified search results to te users.

Connection data of plural search engines is built in a database in a meta search server. After the connection with the meta search server according to an execution of communication programs of the users of the plural client personal computers, the meta search is carried out with the plural search engines connected according to specified search terms inputted by the users of the corresponding client personal computers. The search results carried in the plural search engines are automatically classified according to the specified search terms inputted by the corresponding users and the terms by subjects similar to the search terms and the automatically classified search results according to the specified search terms are outputted to the corresponding client personal computers.

Accordingly, in the present invention, search results classified by subjects can be obtained with one-time search for the users to easily find the search results desired by the users, so that the preciseness of the search results can be enhanced beyond comparison with existing search engines.

## Description

### BACKGROUND OF THE INVENTION

### 1. Field of the Invention

The present invention relates to an internet site search service system using a meta search engine, and more particularly to an internet site search service system using a meta search engine capable of recognizing in real time search documents collected through numerous dedicated search engines all over the world by using a meta search engine, and automatically classifying and providing to a user the search documents by subject similar with search terms, or search key words, that the user inputs.

### 2. Description of the Prior Art

In general, the internet is an open network through which anybody, anywhere in the world, can be freely connected to other computers he wants to hook up with the application of the common protocol of TCP/IP, and which is used for the transmission of basic character information and multimedia information according to the advancement of the data compression technology, together with diverse services such as electronic mails, file transfers, world wide web(WWW), and so on.

Such internet is rapidly spread in its use throughout domestic and foreign countries, so that the importance of the internet is rapidly emphasized as a strategic tool for reconsidering the efficiency and productivity over overall sectors of existing industries. Further, opportunities for brand-new businesses are continuously created through the internet, together with the expansion of business fields, so businessmen who want to use the internet is gradually increased in number.

That is, in recent, Sites are rapidly increased for providing diverse contents such as internet advertisements, internet broadcasts, on-line games, internet newspaper/magazines, search services, portal services, electronic commerce businesses, and so on, as businesses trough the internet.

Accordingly, computer users who want to obtain particular information need to use certain search engines enabling the users to find out numerous sites and various web documents existing in the internet.

In the beginning of internet services, such search engines called 'the first generation search engines' indexes respective sites and web documents at their sides to build a database, and use a searching method for directory services in which users can make access to final documents with a deeper ramification of the searched according to the subject search(or the menu search) of users and the predetermined subject classifications. The Yahoo(http://www.yahoo.com) may be referred to as the typical search engine of the first generation.

However, the increase of the internet, particularly the expansion of the size of the world wide web(WWW) does not allow the subject search as stated above to be smoothly performed. That is, since the materials a search engine holds should be increased in compliance with the explosive expansion of the size of the world wide web(WWW), the method of adding one material by identifying one web page by manual jobs as in the existing first search engine can not catch up the growth of the world wide web(WWW).

Accordingly, a concept of a robot or a spider causes the second generation search engine to appear. The second generation search engine automatically searches and indexes web pages to provide search services. The altavista(http://www.altavista.com) may be the typical second generation engine.

The above second search engine uses a key word search method, and second generation search engines search and provide all documents related to key words users inputs, but the users turn the second generation search engine away since a big volume of searched documents causes inconvenience to the users in that the users have to find out the contents they want from the searched documents again. Accordingly, despite of the burden of many resources in order to overcome the problem the second generation search engine has, the subject search services are still included which are used in the first generation search engine.

As stated above, even though the first and second generation search engines collect diverse documents existing in the internet, even an search engine of Fast Search, http://www.alltheweb.com, which builds the largest documents all over the world among operating search engines at present, collects and holds only 16% of the entire documents existing in the internet. Therefore, since it is difficult for one search engine to catch up the number of web pages which are geometrically progressing, at least three or more search engines should be used to get information that a user wants through search engines, and a user should be acquainted with a search method such as how to use operators, how to input search terms, output forms, and so on every time he uses a new search engine.

Further, since conventional search engines just provide documents searched by key words and boolean operations to users without statistical and intelligent search results to users and provide too many search results to the users who request a search, the purpose of the search is overshadowed as well as the preciseness and the users' reliability with respect to search documents are deteriorated.

Accordingly, in order to eliminate the non-efficiency of the existing search method, the third generation search engines and meta search engines are used. The third generation search engines provide the natural language search for obtaining search results based on fuzzy sets with respect to users' queries with building knowledge bases in themselves, and also provide the clustering classifications of grouping results having a high correlation through the analysis of the text of contents in meaning steps. The meta search engines performs searches that users require by using various special search engines without building separate databases in themselves. However, the above conventional search engines provide to users documents searched by respective search engines through the clustering classifications based on ranking, sites, and sources, not through the real time clustering classifications based on contents.

### SUMMARY OF THE INVENTION

In order to solve the above probems, it is an object of the present invention to provide an internet site search service system using a meta search engine, capable of grasping the contents of searched documents in real time when searching the documents through numerous dedicated search engines all over the world with the use of a meta search engine, automatically clustering the searched documents by subject similar to search terms inputted by a user, and providing search preciseness degrees and documents as many as the user wants.

It is another object of the present invention to provide an internet site search service system using a meta search engine, capable of obtaining desired search results with the use of searches easy for search beginners by presenting a search method without the use of the operators when using the meta search engine.

It is a further object of the present invention to provide an internet site search service system using a meta search engine, capable of enhancing the quality and speed of searches together with the preciseness of search documents by automatically eliminating duplicated search results in case that the source of documents searched through a meta search engine is the same, proceeding with the meta search according to search time arbitrarily given by a user, and displaying the search-progressing process through respective search engine on a screen.

In order to achieve the above objects, the internet site search service system using a meta search engine according to the present invention comprises a communication network for connecting undefined plural communication lines to carry out data communication therebetween; plural client personal computers having communication environments for enabling connections to be made to an external of providing meta search services open in the communication network, and for outputting search terms, or search key words, inputted by a user who wants a meta search to the external, inputting search results outputted from the external, and display the search results on a screen; plural search engines each having a database with respect to index information related to plural sites open in the communication network and web documents in the sites, and for extracting search results based on the index information built in the database according to specified search terms inputted from the external, and outputting the extracted search results to the external; and a meta search server having a database with respect to connection data of the plural search engines, the connection data allowing connection to be made to the plural search engines open in the communication network, and for performing communication connections with the plural search engines according to search terms inputted by a user if certain search terms are inputted from the user, a user being one of the users of the plural client personal computers, receiving search results carried out according to the search terms inputted the user from the search engines, producing search terms by subjects similar to the search terms inputted by the user based on the search results while automatically classifying the search results carried out in the search engines according to the search terms and the terms by subjects, and outputting the automatically classified search results to corresponding client personal computers in real time.

Further, an internet site search service method using a meta search engine, comprising the steps of: (1) building connection data of plural search engines in a database in a meta search server; (2) carrying out connections to the meta search server according to an execution of communication programs of the users of the plural client personal computers; (3) performing the meta search through the connection with the plural search engines according to specified search terms inputted by the users of the corresponding client personal computers in the meta search server; (4) automatically classifying search results inputted from the plural search engines according to the specified search terms inputted by the users and the terms by subjects similar to the search terms; and (5) outputting the search results according to the automatically classified specified search terms to the corresponding personal computers.

### BRIEF DESCRIPTION OF THE DRAWINGS

The above objects and other advantages of the present invention will become more apparent by describing in detail a preferred embodiment thereof with reference to the attached drawings, in which:
FIG. 1 is a block diagram for schematically showing a structure of an internet site search service system using a meta search engine according to an embodiment of the present invention;
FIG. 2 is a block diagram for showing in detail a structure of a meta search server of FIG. 1;
FIG. 3 is a view for showing an example of a search state window in accordance with a meta search progress process of FIG. 1;
FIG. 4 is a view for showing an example of a real time automatic classification window according to meta search results of FIG. 1; and
FIG. 5 is a flow chart for showing in detail operation processes of an internet site search service method using a meta search engine according to an embodiment of the present invention.

### DETAILED DESCRIPTION OF THE PREFERRED EMBODIMENT

Hereinafter, an internet site search service system using a meta search engine according to an embodiment of the present invention will be described in detail with reference to the accompanying drawings.

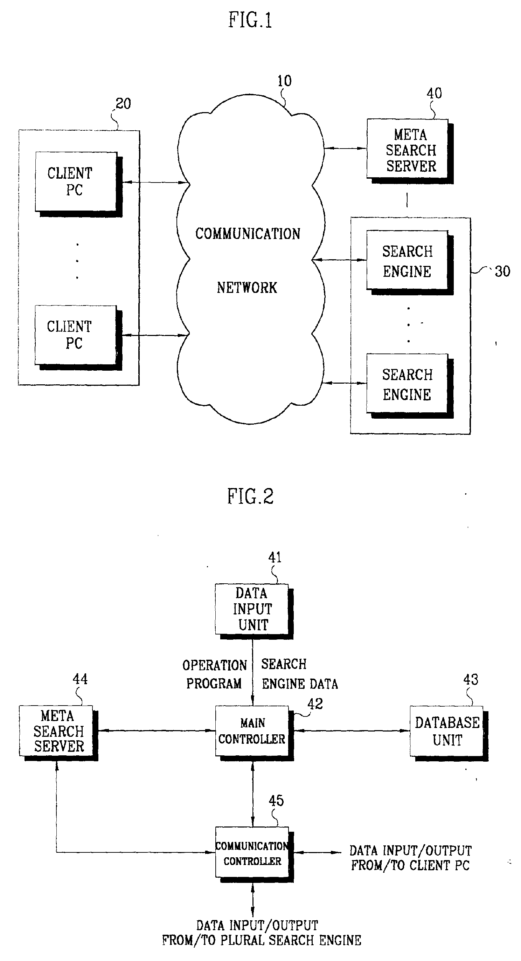

FIG. 1 is a block diagram for schematically showing a structure of an internet site search service system using a meta search engine according to an embodiment of the present invention.

As shown in FIG. 1, a communication network 10 is a communication network for the internet and the like, which connects communication lines between plural client personal computers(PC) 20 and a meta search server 40 and between plural search engines 30 and the meta search server 40 to communicate with data therebetween.

Further, the communication network 10 connects communication lines between the plural client personal computers 20 and the plural search engines 30 to perform data communications related to general searches.

The plural client personal computers 20 are equipped with communication environments such as web browsers and the like to be connected to the meta search server 40 for providing meta search services open in the communication network 10, outputs to the meta search server 40 specified search terms inputted by a user who wants the meta search, and inputs and displays on a screen search results outputted from the meta search server 40.

The plural search engines 30 builds index information related to plural sites and web documents in the sites open in the communication network 10 in a database, extracts search results based on the index information built in a database according to specified search terms inputted from the meta search server 40, and outputs the extracted search results to the meta search server 40.

The meta search server 40 builds the connection data of each of the search engines 30 in a database to be connected to the plural search engines 30 open in the communication network 10, and performs communication connections with the plural search engines 30 according to search terms inputted by users if the user of the plural client personal computers 20 connected for communications input the search terms.

Further, the meta search server 40 inputs search results obtained from search engines 30 according to the search terms inputted by the users, produces terms by subject similar to the search terms inputted by the users based on the search results, automatically classifies the search results carried out in the plural search engines according to the search terms and the terms by subject, and outputs the search results automatically classified in real time to corresponding client personal computers 20.

At this time, the above meta search server 40 finds out and recommends to the users of the client personal computers 20 sites and web documents having data most approximated to specified search terms inputted by a user from plural search results inputted from the plural search engines 30, and automatically eliminates duplicated search results in case that the source of documents through the plural search engines 40 is the same(for example, in case that the URL is the same), and provides the duplication-eliminated search results to the users of the client personal computers 20.

Further, FIG. 2 is a block diagram for showing in detail a structure of a meta search server 40 of FIG. 1.

As shown in FIG. 2, the data input unit 41 inputs and outputs to a main controller 42 an operation program for supporting meta search services used by the users of the plural client personal computers 20, and connection data of permitting connections to the plural search engines 30.

The main controller 42 stores the connection data of the plural search engines 30 in a database unit 43 through the data input unit 41, performs communication connections with the plural search engines 30 through a meta search engine 44 and a communication controller 45 according to certain search terms inputted by the users of the client personal computers 20, and inputs plural search results from the plural search engines 30 according to specified search terms inputted by the users.

Further, the main controller 42 produces terms by subject similar to search terms inputted by the users based on the plural search results inputted from the search engines 30 while automatically classifying the results searched through the plural search engines 30 into the search terms inputted by the users and the terms by subject similar to the search terms, and outputs the automatically classified search results to the client personal computers 20 in real time.

The database unit 43 stores connection data by the plural search engines 30 inputted through the data input unit 41 according to the control of the main controller 42, and outputs the connection data by the plural search engines 30 stored in advance according to a request of the main controller 42.

The meta search engine 44 proceeds with the communication connections with the plural search engines 30 according to the control of the main controller 42 to output specified search terms inputted by users to the plural search engines 30, and inputs the search results from the plural search engines 30. The search results are outputted to the main controller 42.

The communication controller 45 inputs specified search terms for the meta search which a user inputs with the client personal computers 20 connected for communications, and carries out the communication connection with the plural search engines 30 according to the main controller 42 and the meta search engine 44. The inputted specified search terms are outputted to the main controller 42.

Further, the communication controller 45 inputs search results carried out in the plural search engines 30 according to the specified search terms inputted by te users of the client personal computers 20, and outputs the automatically classified search results to the corresponding client personal computers 20 in real time according to the main controller 42. The search results are outputted to the meta search engine 44.

At this time, the meta search server 40 provides all search engines which allows the meta search, search time constituted in plural steps, and the number of search results to the client personal computers 20 in order for the users of the client personal computers 20 to directly select desired search engines from the plural search engines 30, set time for waiting for the search results, and set the number of the search results.

For example, in case that the users of the plural client personal computers 20 set the time for performing the meta search by 20 seconds, the search is restrained if the communication connection with the corresponding search engines 30 is performed and the search according to specified search terms is not carried out within the set time, and in case that the users of the client personal computers 20 set the number of the search results by 10 for each of the search engines 30, the search is finished as soon as the number of the search results carried in the specific search engine 30 exceeds the number of the search results set by the users.

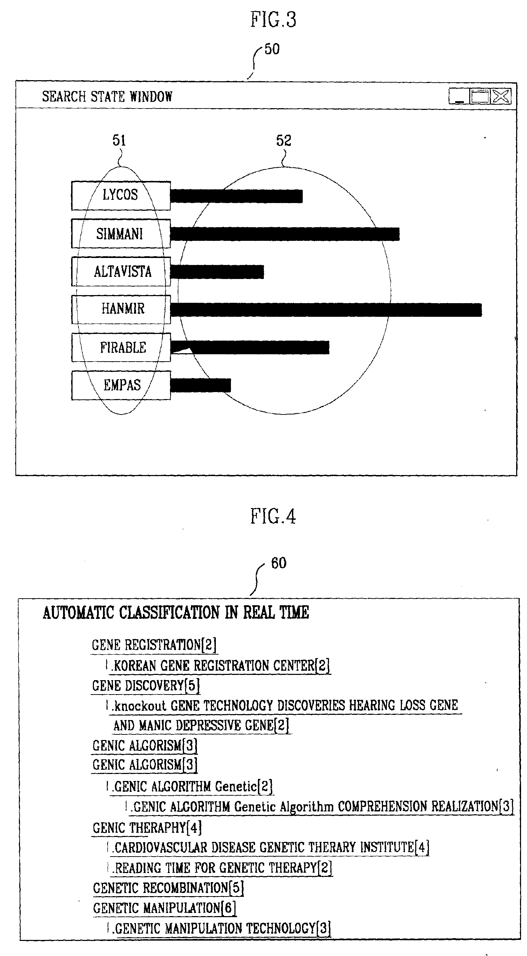

Further, FIG. 3 is a view for showing an example of a search state window 50 in accordance with a meta search progress process of FIG. 1. According to the search request of the users of the plural client personal computers 20, the meta search progressing steps through each search engine 30 operating in the meta search server 40 are classified by each search engine 30, and displayed in a bar shape in order for the users to confirm the meta search progressing at the present time.

That is, the users of the client personal computers 20 can confirm which search engine 30 is connected through a search engine name-displaying subwindow 51 of the search state window 50 as well as confirm to what extent the meta search is progressed through a progress state-displaying window 52.

At this time, in addition to the method for displaying the above meta search progress processes in a bar shape by each search engine, various methods may be employed for displaying the meta search progress processes on a screen.

In the meantime, FIG. 4 is a view for showing an example of a real time automatic classification window 60 according to meta search results of FIG. 1. Even though the users of the client personal computers 20 inputs a single term in the meta search server 40, the meta search server 40 produces terms by subjects similar to specified search terms inputted by the users based on plural search results and automatically classifies the search results according to the terms by subjects. The automatically classified search results are provided to the users.

For example, in case that the users of the client personal computers 20 input a term of 'gene' in the meta search server 40, the meta search server 40 produces terms by subjects such as 'genetic engineering', 'gene registration', 'gene discovery', 'genic algorithm', and so on, similar to the term of 'gene' based on plural search results searched from each search engine 30, and automatically classifies the search results according to the terms by subjects. The meta search server 40 provides the automatically classified search results to the users of the client personal computers 20.

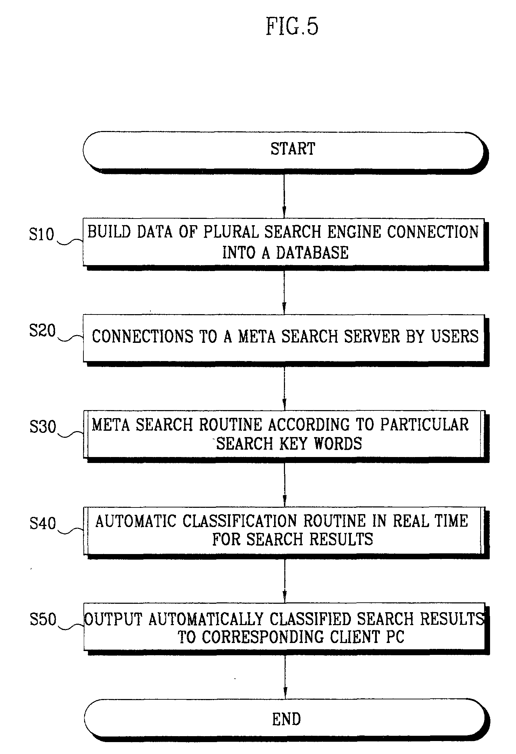

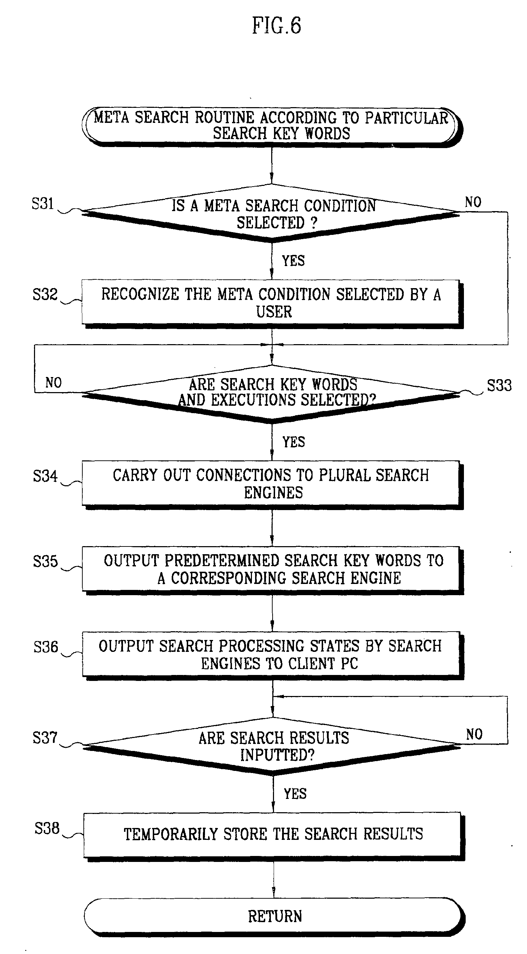

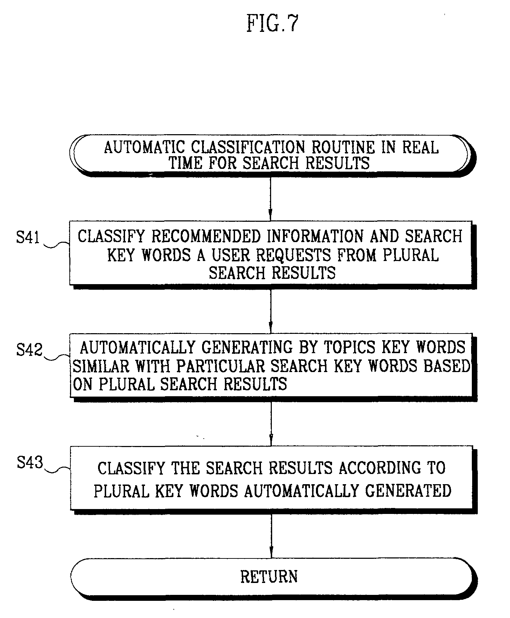

Next, an internet site search service method using a meta search engine according to an embodiment of the present invention will be described in detail with reference to FIG. 5 to FIG. 7.

FIG. 5 to FIG. 7 are flow charts for showing in detail operation processes of an internet site search service method using a meta search engine according to an embodiment of the present invention.

First of all, the meta search server 40 for providing meta search services through numerous search engines 30 open in the communication network 10 builds connection data of allowing connections to the search engines 30 in a database(S10).

Further, even though not shown in the figures, the meta search server 40 builds the database in several steps in order for the users of the plural client personal computers 20 to select search engines to be used for the meta search, search time, and the number of search results.

For example, the meta search server 40 builds the database by setting 10, 20, 30 seconds, or the like for the search time and 10, 20, 30, or the like for the number of search results in order for the users of he client personal computers 20 to select the conditions.

As stated above, after building the connection data of the search engines 30 in a database, the meta search server 40 confirms whether communication connections are made in accordance with the execution of a communication program of each of the users of the client personal computers 20(S20).

Further, after the communication connections are made for the users of the client personal computers 20, the meta search is performed through the communication connections of the search engines 30 built in the database as in the above step S10 in accordance with certain search terms inputted for the meta search by a user(S30).

Described in detail for the above, before each of the users of the client personal computers 20 which is in the communication connections uses the meta search, the meta search server 40 judges whether meta search conditions such as search engines, search time, and the number of search results are selected through predetermined form data provided from the meta search server 40(S31).

As a judgement result, if each of the users of the client personal computers 20 selects the meta search conditions provided from the meta search server 40, the meta search server 40 recognizes the meta search conditions selected by the corresponding user(S32).

Further, after recognizing the meta search conditions in the above step S32 or if the meta search conditions are not selected by each of the users of the client personal computers 20 in the above step S31, the meta search server 40 judges whether each of the users of the client personal computers 20 inputs certain search terms for the meta search and selects the execution of the meta search(S33).

As a judgement result, if specified search terms are inputted by each of the users of the client personal computers 20 and the execution of the meta search is selected, the meta search server 40 carries out the communication connections with the plural search engines 30 built in a database(S34), and outputs certain search terms inputted by each of the users of the client personal computers 20 to the plural search engines 30 which are in the communication connections(S35).

Further, the meta search server 40 to the corresponding client personal computers 20 search progressing state by plural search engines 30 which execute searches according to the search terms(S36).

After that, the meta search server 40 judges whether search results according to the meta search conditions set by each of the users of the client personal computers 20 or the basic meta search conditions are inputted from the plural search engines 30(S37) and temporarily stores the search results inputted from the plural search engines 30(S38).

At this time, the above basic meta search conditions, in case that a user does not set meta search conditions in the above step S31, are the default values(for example, 10 seconds for the search time, 10 for the number of the search results) set in the meta search server 40.

The meta search server 40 which receives the search results inputted from the plural search engines 30 through the above step S30 automatically classifies the data of the plural search engines 30 according to the terms by subjects similar to te specified search terms inputted by the corresponding user and the search terms(S40).

Described in detail for the above, the meta search server 40 classifies recommendation information related to the search terms inputted by a user from the plural search results searched from the plural search engines 30 according to the specified search terms inputted by the user(S41). That is, the meta search server 40 classifies and recommends the sites or web documents most closely related to the search terms inputted by a user.

Further, the meta search server 40 automatically produces plural terms by subjects similar to the specified search terms inputted by a user based on the plural search results(S42), and classifies the plural search results searched from each of the search engines 30 according to the plural terms by subjects which are automatically produced(S43).

At this time, in the above step S43, the meta search server 40 displays the number of automatically classified search results in number for each of corresponding terms by subjects according to the plural terms by subjects, and displays the classification of the search results in order close to the corresponding search terms (refer to FIG. 4).

Further, the meta search server 40, in case that the source of documents searched from each of the search engines 30 is the same, excludes the same search results when provided to the users of the client personal computers 20.

Lastly, the plural search results from the meta search through the above step S40 are automatically classified in real time, and the meta search server 40 outputs the classified search results to the corresponding client personal computers 20(S50).

At this time, in case that plural meta search results are outputted according to the search terms inputted by each of the users of the client personal computers 20, the meta search server 40 classifies and outputs the plural meta search results in search result items according to a best recommendation item, a real time automatic classification item, and terms by subjects.

As stated above, in an internet site search service system using a meta search engine according to the present invention, a meta search server searches and grasps plural search results searched through plural search engines according to search terms requested by a user, produces diverse subdivided items by itself according to the search terms and classifies the diverse subdivided items by subjects, and recommends the search results most similar to the search terms, to thereby easily find the search results that a user wants.

Further, the meta search server checks whether there exist duplicated search results from the results searched through the plural search engines to exclude the same search results, to thereby greatly reduce the time for verifying the search results. Accordingly, the preciseness of the search results can be enhanced beyond comparison with existing search engines, and the reliability of the meta search can be heightened since users can directly recognize the meta search progressing state.

Further, search results classified by subjects can be obtained with one-time search through the meta search engine, and the search results can be obtained from diverse dedicated search engines through the meta search, to thereby greatly reduce time for acquiring information. Furthermore, the inconvenience caused by studying brand-new search engines whenever the brand-new search engine is introduced can be greatly decreased.

Although the preferred embodiment of the present invention has been described, it will be understood by those skilled in the art that the present invention should not be limited to the described preferred embodiment, but various changes and modifications can be made within the spirit and scope of the present invention as defined by the appended claims.

## Claims

1. An internet site search service system using a meta search engine, comprising:
a communication network for connecting undefined plural communication lines to carry out data communication therebetween;
plural client personal computers having communication environments for enabling connections to be made to an external of providing meta search services open in the communication network, and for outputting search terms, or search key words, inputted by a user who wants a meta search to the external, inputting search results outputted from the external, and display the search results on a screen;
plural search engines each having a database with respect to index information related to plural sites open in the communication network and web documents in the sites, and for extracting search results based on the index information built in the database according to specified search terms inputted from the external, and outputting the extracted search results to the external; and
a meta search server having a database with respect to connection data of the plural search engines, the connection data allowing connection to be made to the plural search engines open in the communication network, and for performing communication connections with the plural search engines according to search terms inputted by a user if certain search terms are inputted from the user, a user being one of the users of the plural client personal computers, receiving search results carried out according to the search terms inputted the user from the search engines, producing search terms by subjects similar to the search terms inputted by the user based on the search results while automatically classifying the search results carried out in the search engines according to the search terms and the terms by subjects, and outputting the automatically classified search results to corresponding client personal computers in real time.

2. The internet site search service system as claimed in claim 1, wherein the meta search server includes:
a data input unit for inputting an operation program supported by a server administrator for meta search services used by the users of the plural client personal computers, and the connection data for allowing connections to be made to the plural search engines;
a main controller for storing the connection data of the plural search engines inputted through the data input unit, controlling the communication connections with the plural search engines according to specified search terms inputted by the users, receiving search results carried out in the plural search engines according to the specified search terms, producing the search terms by subjects similar to the search terms inputted by the user based on the search results while automatically classifying the results searched through the plural search engines into the search terms inputted by the user and the terms by subject similar to the search terms, and controlling the output of the automatically classified search results in real time;
a database unit for storing the connection data of the plural search engines inputted through the data input unit according to the control of the main controller, and outputting the connection data of the plural search engines stored in advance according to a request of the main controller;
a meta search engine for outputting the specified search terms inputted by the user by carrying out the communication connections with the plural search engines according to the control of the main controller, receiving the search results from the plural search results, and outputting the search results to the main controller; and
a communication controller for receiving the specified search terms inputted by the user for the meta search according to the communication connections of the client personal computers, outputting the specified search terms to the main controller, carrying out the communication connections with the plural search engines according to the controls of the main controller and the meta search engine, receiving the search results carried out in the corresponding search engines according to the specified search terms inputted by the user, outputting the search results to the meta search engine, and outputting the automatically classified search results in real time to the corresponding client personal computers according to the control of the main controller.

3. The internet site search service system as claimed in claim 1 or 2, wherein the meta search server provides all search engines of allowing the meta search, search time constituted in plural steps, and the number of search results to the plural client personal computers, in order for the users of the plural client personal computers to directly select desired search engines from the plural search engines, set time for waiting for the search results, and set the number of the search results.

4. The internet site search service system as claimed in claim 1 or 2, wherein the meta search server, in case that the meta search is carried out through the plural search engines according to a search request of the users of the plural client personal computers, displays search progress processes by search engines in a bar shape in order for the users to verify the meta search progressed at present.

5. An internet site search service method using a meta search engine, comprising the steps of:
(1) building connection data of plural search engines in a database in a meta search server;
(2) carrying out connections to the meta search server according to an execution of communication programs of the users of the plural client personal computers;
(3) performing the meta search through the connection with the plural search engines according to specified search terms inputted by the users of the corresponding client personal computers in the meta search server;
(4) automatically classifying search results inputted from the plural search engines according to the specified search terms inputted by the users and the terms by subjects similar to the search terms; and
(5) outputting the search results according to the automatically classified specified search terms to the corresponding personal computers.

6. The internet site search service method as claimed in claim 5, wherein the database in the step(1) is a database classified in plural steps in order for the users of the plural client personal computers to select the search engines to be used for the meta search, search time, and the number of search results in the meta search server.

7. The internet site search service method as claimed in claim 5, wherein the step(3) includes steps of:
(3-1) judging whether the users of the client personal computers select meta search conditions of the search engines, search time, and the number of search results through certain form data provided in the meta search server before using the meta search;
(3-2) recognizing the meta search conditions selected by the users in the meta search server if the meta search conditions are selected by the users of the client personal computers;
(3-3) judging whether certain search terms for the meta search are inputted and an execution of the meta search is selected by the users of the client personal computers in the meta search server, if the meta search conditions are not selected by the users of the client personal computers after recognizing the meta search conditions or in the step(3-1);
(3-4) executing communication connections with the plural search engines built in the database in the meta search server if the execution of the meta search is selected by the users;
(3-5) outputting the search terms inputted by the users of the client personal computers to the plural search engines;
(3-6) outputting to the corresponding personal computers search progress states by plural search engines of progressing the search according to the search terms in the meta search server;
(3-7) judging whether search results according to the meta search conditions set by the users or basic meta search conditions are inputted from the plural search engines; and
(3-8) temporarily storing the search results inputted from the plural search engines.

8. The internet site search service method as claimed in claim 5, wherein the step(4) for the automatic classification includes steps of:
(4-1) classifying recommendation information related to the search terms inputted by the users from the plural search results searched by te plural search engines and temporarily stored;
(4-2) automatically producing plural terms by subjects similar to the specified search terms inputted by the users based on the plural search results; and
(4-3) classifying the plural search results according to the automatically classified plural terms by subjects.

9. The internet site search service method as claimed in claim 8, wherein the step(4-3) for classifying the plural search results displays the number of the automatically classified search results according to the plural terms by subjects in the meta search server in number for the corresponding terms by subjects.

10. The internet site search service method as claimed in claim 5, wherein the step(5), in case of outputting the plural meta search results according to the search terms inputted by the users of the client personal computers in the meta search server, outputs the plural meta search results into search result items according to a best recommendation site item, a real time automatic classification item, and terms by subjects.
